# EUROPEAN PATENT APPLICATION

(11) **EP 2 797 188 A1**
(43) Date of publication of application: **29.10.2014**
(21) Application number: 12859562.6
(22) Date of filing: 19.12.2012
(51) Int. Cl.: H02G 1/12, B24C 1/08, B21C 43/04

(54) **DEVICE FOR SCOURING CABLES**

(30) Priority: 19.12.2011 ES 201101222
(71) Applicant: Fundación Prodintec, 33203 Gijón (ES)
(72) Inventor: VILLARRICA VIÑES, Jorge, E-33203 Gijón (ES); VALENZUELA CASTAÑEDA, Adrián, E-33203 Gijon (ES)
(74) Representative: Carlos Hernando, Borja
(86) International application number: PCT/ES2012/070881
(87) International publication number: WO 2013/093158

(57) **Abstract**

The invention relates to a cable-scouring device which comprises at least one polishing tank (1) having at least one fluid intake pipe (3) for at least one pressurised fluid (11) which is joined to at least one material intake pipe (5) for at least one abrasive material (4) forming at least one outlet pipe for the abrasive fluid (6) which connects with the inside of at least one polishing chamber (2) and sprays at least one abrasive fluid (7), consisting of the mixture of at least one pressurised fluid (11) and at least one abrasive material (4), onto at least one cable or wiring harness (9), having at least one conductor (8) on the inside thereof and being housed inside said at least one polishing chamber (2), inserted from the outside of said at least one polishing tank (1) through at least one cable intake (10). The abrasive material (4) can be located in the lower inner portion of the polishing tank (1) or in an external container (12).

## Description

### FIELD OF THE INVENTION

The present invention, a cable-scouring device, relates to a device that, via a fluid with abrasive particles, is used to remove coatings on cables and, more specifically, a device that uses impact means on at least one cable that is covered externally.

### BACKGROUND OF THE INVENTION

There are different systems and devices for removing the coating of cables, which may be very hard as in the case where such coating is an insulating lacquer or varnish. The removal systems of the mentioned coatings may be classified, according to their nature, into systems based on chemical means and based on physical means. In the case of the systems based on physical means, these consist of systems for cutting the coating as well as of scouring systems using impact means, such as friction or shot blasting.

With each of these practices a certain result is achieved that is not always satisfactory since they may lead to a reduction in the cross-section of the cable or to deterioration of the same. The systems that use impact means to scour wiring have given more satisfactory results in terms of finish.

Cable must be understood as a coated conductor, a conductor being a wire or wires made up of the conducting material itself and therefore uncoated. Likewise, a wiring harness is, for the purpose of the present application, a set of cables, or covered conductors, that are joined to each other, and which in turn may also be coated.

An example of a device used for cable stripping using cutting means is described in the Spanish utility model ES0265081 U, which relates to an apparatus for stripping cables that are protected by layers of insulation, i.e., electric cables with one or more conductors that are coated with layers of plastic-type material. The device is based on making two longitudinal cuts that are diametrically opposed along the length of the conductor, in such a way that the insulating layers may subsequently be disassembled with ease.

Regarding scouring systems using impact means, there are several references in the state of the art. The patent document number US3906672 describes a scouring device provided with wet abrasive grit blasted by means of an apparatus adapted to scour the length of a cable with a round cross-section that is moved while kept tense by its ends. Furthermore, the patent document JP1160304A describes a system for scouring a cable by means of an injector that blows an abrasive against the cable, thus removing the external coating thereof. The patent US8007563B1 describes an impact method via a fluid onto a cable that is comprised of an outer jacket and a group of coated wires inside thereof, in order to simultaneously remove the majority of the outer jacket, and at least a portion of the coverings on the inner metal wire. The outer jacket is removed along the length of the cable that is moved while kept tense between two ends. Another patent document, US5904610, describes the removal of enamel insulation along the length of a cable that is moved while kept tense, said removal being carried out by the abrasion of the enamel covering with a pressurised particle stream such as baking powder, while the inside is not damaged. The wire passes through a chamber and nozzles that direct the particle stream towards the cable. From the chamber it is evacuated at an outlet in order to expel the waste particles from the chamber. In another embodiment, the particle stream is directed through an outlet at the opposite side of the wire in order to remove the waste particles and evacuate them.

The systems that use impact means to scour the wiring are the ones that have a better cable finish once processed, however, all of them affect the cable, damaging them or occasionally reducing the cross-section thereof.

All the patents of the state of the art, except document JP1160304A, describe devices that are used for scouring the entire length of a cable subjected to tension, while the present invention relates to a device for only scouring the tips of a cable that may be moved vertically in such a way that the length of the cable end to be stripped may be determined. This difference entails that the device, object of the present invention, does not have cable moving and tensing means, thus making the same more reliable and economical as the number of components is reduced.

Likewise, the device of the present invention may be used to scour a wiring harness, i.e., several cables that are each formed of a coated wire or conductor, and upon the assembly of which a new coating may be applied. Wiring harnesses, as opposed to individual cables, have the disadvantage that they never have the same geometry, and the coating thereof, usually lacquer or varnish, comes with defects, such as different drops every time, for example. This lack of homogeneity in the coating complicates the process of removing the coating by the existing methods in the current state of the art. Document JP1160304A, which is the only one that enables cable ends to be scoured, does not have any means for the extraction of the waste material after scouring, in such a way that the cable coating waste and the fluid remain stored in the same scouring chamber.

Moreover, all the devices use a liquid combined with an abrasive material as an abrasive fluid in order to scour the cable, thus complicating the installation of the device as it requires more complex installations such as, for example, storage for the liquid, manipulation means, sealed pipes, difficulty in recovering waste, etc., thus complicating the process of scouring as well as raising the cost.

In summary, the device of the present invention has great advantages regarding the known cable stripping equipment, especially for cables coated in lacquer or varnish, whether via chemical or mechanical methods since it does not damage the conductive part of the cable or wiring harness. Furthermore, the time invested in the task is reduced and it creates a clean working environment, since all the waste material remains contained inside the device, thus facilitating the cleaning and maintenance thereof.

### DESCRIPTION OF THE INVENTION

The device, object of the present invention, resolves the limitations of the cable scouring systems and devices known in the state of the art and described above. In this way, the device, object of the invention, enables the removal of the coating of a cable or wiring harness via the application of a pressurised fluid, preferably not liquid and more preferably air, which carries an abrasive material, thus leaving the cable's inner connector or wire, usually made of copper, exposed without damaging them. Therefore, the present device achieves the scouring of at least one cable or wiring harness that removes the external covering, preferably lacquer or varnish, of the cable or cables to be treated without damaging the conductors or wires inside thereof. Moreover, it seeks to achieve lower operating costs and lower maintenance needs for this improved device than those that are known.

The device is mainly formed of a polishing tank, an injection system and the cable or wiring harness to be scoured. In turn, the injection system is formed of one or several nozzles, the abrasive material and the draw fluid, in order to obtain the mixture of both. A device for scouring cables is therefore a first object of the invention, according to the first claim, to remove the coating of at least one conductor and that comprises: at least one polishing tank with at least one cable intake; at least one first intake pipe for a pressurised fluid in the polishing tank; at least one second material pipe for at least one abrasive material joined to the first intake pipe, at least one third pipe for abrasive fluid determining said pipe joint, this fluid being comprised of the pressurised fluid and the abrasive material, and the polishing tank comprising a polishing chamber inside thereof, separated from the polishing tank, with at least said cable intake and at least one intake of a third abrasive fluid pipe in the chamber, the detached coating of the cable and the abrasive fluid mixing in said chamber. Said third pipe ends in at least one injection nozzle through which the abrasive fluid comes out, which acts on the cable or wiring harness to be scoured in order to remove the coating that surrounds the conductor or wire.

Inside the fluid chamber, the abrasive fluid that is contaminated with the remains of the scoured cable coating is confined, avoiding contact thereof with the unused abrasive material and therefore avoiding contamination thereof. Moreover, via this device, both emissions and spraying are also confined to outside said waste material, thus facilitating the cleaning of the device once the scouring process has ended and reducing the time dedicated to this operation as cleaning is carried out on a smaller volume. In fact, the device may have outlet means for the extraction of waste that is formed by the abrasive material, preferably shot, and the remains removed by the scouring operation, which outlet means may be a pipe through which the abrasive material is cleared via aspiration or gravity. Likewise, it is possible for the device itself to comprise an incorporated waste separation system.

The abrasive material to be used should not be toxic or generate by-products that are harmful to the operators, nor generate waste resulting in high maintenance costs.

The inner geometry of the polishing chamber, situated inside the polishing tank, is such that it favours multiple impacts of the abrasive fluid on said at least one cable, for example, causing the fluid to bounce on the walls of the chamber, and in turn, hit the cable on different occasions before falling to the bottom of the chamber for subsequent recycling thereof.

Said at least one cable intake may be of variable size thus enabling use thereof with different cable diameters and enabling the longitudinal movement of the cable or wiring harness through the same in order to regulate the length that must to be scoured. Despite the fact that the device is used for a single cable or wiring harness, it is possible for there to be different cable intakes in the device for those cases in which, for example, it is necessary to simultaneously scour several wiring harnesses simultaneously. In these cases, at least 2 sets of nozzles may be provided for scouring thereof. These sets may in turn be at two different heights, since it may be necessary for the wiring harnesses to have different stripped lengths.

Furthermore, said at least third pipe for abrasive fluid is suitably orientated inside the fluid chamber in such a way that the spraying of said abrasive fluid onto the cable, through the injector or injectors situated at the ends of said at least third pipe, enables the greatest possible surface of the cable to be scoured and even cover 360° with the ordered arrangement of several outlet pipes for the fluid, i.e., the end of said third outlet pipe for the abrasive fluid may be orientated. Preferably, said at least third outlet pipe for abrasive fluid is built of a material that is flexible, semi-rigid, or of any other type that enables its curvature and connection angle with the polishing chamber to be modified. This facilitates orientation of the spray of abrasive fluid onto the cable to be scoured, thus enabling the orientation to be adapted to any type of cable in order to maximise the surface to be scoured.

As has been mentioned, the scouring device has at least one second material intake pipe for at least one abrasive material that feeds the at least one first fluid intake pipe for at least one pressurised fluid, preferably air, with at least one abrasive material that is found deposited in the lower portion of said at least one polishing tank. Via this connection, the at least one pressurised fluid produces an effect of drawing the at least one abrasive material by the Venturi effect; by mixing both components, the fluid and abrasive material, at least one abrasive fluid is produced, which, when sprayed onto said at least one cable, scours the coating of said cable, leaving the at least one conductor or cable exposed. An alternative to the foregoing is for the abrasive material to not be stored in the polishing tank, but rather be stored in an external container, in such a way that said second pipe is fed with the abrasive material from said external container to the polishing tank. Via this alternative, the at least one abrasive material may be easily refilled, i.e. as the at least one abrasive fluid is used up by being sprayed onto the at least one cable. Equally, this configuration enables the at least one external container to be fed with different abrasive materials or different grain sizes of the same material throughout the scouring process, using highly abrasive materials to remove the coating at the start of the process and materials with low abrasiveness for the final part of the process and give the finish to the scoured cable.

It is also possible to store shot in the polishing tank, this shot hold being supplied from an external storage or container.

When the abrasive material is situated in an external container, it is possible to make use of the space intended for shot storage in the devices that store the shot in the polishing tank, in order to incorporate a waste separation system inside the device. In any case, said waste separation system may be included in any device, object of the invention, even when it has the shot storage inside the polishing tank.

Said polishing tank is sufficiently resistant and has the appropriate geometry to contain the elements that form the device. As has been mentioned, at least one cable is inserted through a cable intake into said tank for the subsequent stripping or scouring thereof. The size of said cable intake may vary for each type of cable or cables, and it is strategically situated in the polishing tank for the correct operation of the device. In order to achieve this variability, an interchangeable module is provided at the cable intake that adapts to the dimensions of each cable. The length of the cable or wiring harness to be inserted depends on the length of the cable to be scoured, the portion of the cable, or cables, protected by the original coating thereof and that does not need to be scoured thus remaining in the external portion of the device. Inside said polishing tank, the abrasive fluid is sprayed onto the portion of the cable or wiring harness to be scoured. The polishing tank has hand holes in order to comfortably and effectively carry out cleaning when the device so requires.

The at least one nozzle or injector that is situated on the end of the at least one third pipe that transports the abrasive fluid to the polishing chamber, is responsible for shot blasting the abrasive fluid in the direction of the cable or wiring harness. Preferably, as many nozzles or injectors as necessary are used in order to distribute said abrasive fluid over the entire circumference of the cable or cables, i.e. over all 360° thereof, thus achieving complete and uniform scouring thereof.

The present device may also comprise heating means for the pressurised fluid, heating means for the cable or wiring harness and/or heating means for the abrasive material, in order to facilitate the stripping of the cable or harness, since the heat weakens the coating, in such a way that when the abrasive fluid acts on the cable or harness, the scouring is carried out more effectively and simply. This is because, since in the cases where the scouring of the end of a wiring harness is desired, it is difficult for the abrasive fluid to reach the core thereof, for which reason said heating facilitates the action of the abrasive. Clearly, these heating means may be used for cables that are not harnesses since it contributes to a reduction in the time the cable is exposed to the abrasive.

Regarding the heating means for the cable or wiring harness, they may be situated in different portions of the device, although it is recommended that they act directly on the coating, for which reason the ideal position thereof is before the cable or wiring harness intake where it enters the device.

Regarding the heating means for the fluid, the ideal position thereof is at the intake pipe for the pressurised fluid, so that as the abrasive fluid forms the fluid is pre-heated and in turn favours the heating of the abrasive material and the rest of the channels. Regarding the heating means for the abrasive material, they are preferably situated in the areas where they are stored prior to use.

### DESCRIPTION OF THE FIGURES

The following figures are attached in order to aid in the understanding of the invention, and are related to several embodiments thereof, presented as illustrative and non-limiting examples of the same.
Figure 1 is a schematic representation of a configuration of the cable-scouring device wherein the abrasive material is stored in the lower portion of the polishing tank and is drawn by the pressurised fluid by the Venturi effect, both mixing together in order to become an abrasive fluid that is sprayed onto the cable inside a polishing chamber.
Figure 2 is a schematic representation of a configuration of the scouring device wherein the first intake pipes for pressurised fluid, the second intake pipes for abrasive material as well, as the third outlet pipes for abrasive fluid are double.
Figure 3 is a schematic representation of a configuration of the scouring device wherein the abrasive material is stored in an external container, mixing with the pressurised fluid outside the polishing tank to become an abrasive fluid that is sprayed onto the cable inside a polishing chamber.

### DESCRIPTION OF PREFERRED EMBODIMENTS OF THE INVENTION

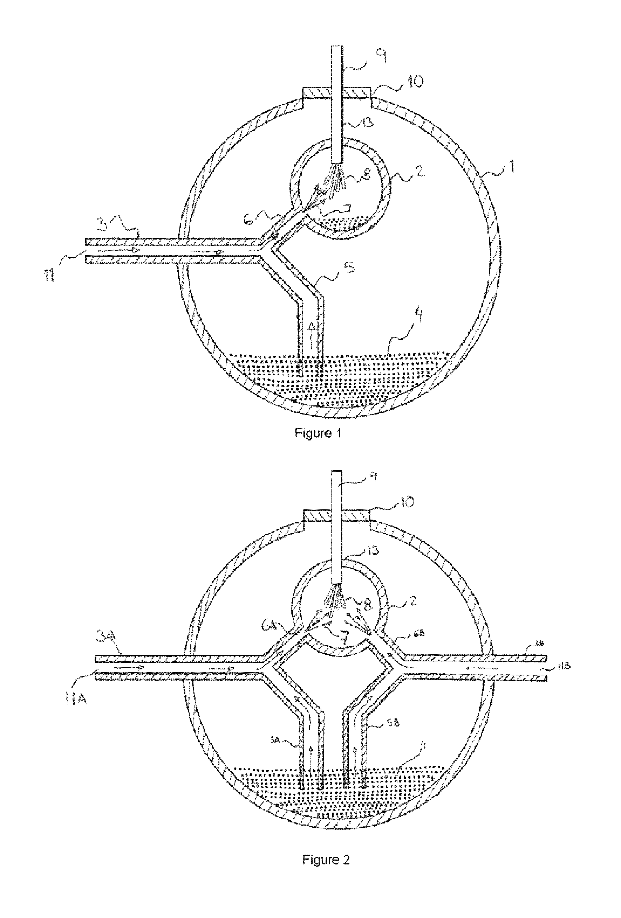

In order to aid in understanding the invention, an exemplary embodiment thereof is described below with reference to the included figures that are described above. Figure 1 shows one of the arrangements of the device, object of the invention. In the same, the cable or wiring harness (9) is in the same polishing chamber (2) as the abrasive material (4). The polishing tank (1) is the casing or container of the device, and inside thereof the nozzles or injectors are arranged situated at the free end of the third pipe (6) that transports the abrasive fluid (7), made up of the fluid (11), preferably compressed air, and the abrasive material (4). Said nozzle or nozzles are orientated in the direction of the cable or wiring harness (9). In this example, all the components may be manufactured from any steel alloy with sufficient strength to withstand the impact of the abrasive material (4) comprised by the abrasive fluid (7).

The pressurised fluid (11) enters the first pipe (3) from the outside until it reaches the third pipe (6) and draws the abrasive material (4) through the Venturi effect, in such a way that both form the mixture (7) that comes out of the nozzle or nozzles situated at the free end of the third pipe (6). It may also be seen how the abrasive material (4) accesses the second pipe (5) to subsequently join with the first fluid pipe (3) and form the third pipe (6) for abrasive fluid (7). The abrasive particles (4) are stored in the lower portion of the polishing tank (1). The result of spraying the abrasive fluid (7) against the cable or wiring harness (9) leaves the conductors or wires (8) of said cables or wiring harness (9) exposed. The portion through which the cable or wiring harness (9) is inserted in order to be scoured is the intake (10) made in the tank (1) and that may be adapted via a modular part for the different sections of cable or wiring harness (9). Consequently, the polishing chamber (2) has a cable or wiring harness (9) intake (13) that enables the former to access the inside of the chamber (2). It is possible, depending on the construction of the polishing tank (1) and chamber (2), for said cable intakes (10, 13) to coincide, there thus being a single cable or wiring harness (9) intake in the device.

Once the cable or wiring harness (9) has been scoured, the waste material made up of the abrasive material or shot (4) and the remains of the coating of the cable or wiring harness (9) are housed at the bottom of the polishing chamber (2). Said waste must be removed, for which purpose said chamber comprises extraction means (not shown) for said waste material. Said extraction means (not shown) may consist of a hand hole for the manual extraction of the waste or an automatic device connected to the polishing chamber via a pipe that extracts said waste from the chamber using aspiration or gravity. Said waste is preferably treated in order to separate it and then be able to reuse the shot. Said treatment of the waste may be incorporated into the device, object of the present invention, or be independent of the same.

A second preferred embodiment may be seen in figure 2, in which, as opposed to the first example shown in figure 1, the device shows a polishing tank (1), preferably of any steel alloy, which has two first fluid intake pipes (3A, 3B), also manufactured in any steel alloy, through which the compressed air (11A, 11 B) circulates as a compressed fluid, with a pressure preferably comprised between 400,000 and 1,500,000 Pascal (4 and 15 bar). The first fluid intake pipes (3A, 3B) are joined to two second material intake pipes (5A, 5B), manufactured in any steel alloy, then forming two third abrasive fluid outlet pipes (6A, 6B) that connect to the inside of a polishing chamber (2). The second material intake pipes (5A, 5B) draw an abrasive material (4), such as metal abrasive shot for example, by the Venturi effect of the compressed air (11A, 11 B). In the third abrasive fluid outlet pipes (6A, 6B), the abrasive material (4) is mixed with the compressed air, thus forming an abrasive fluid (7) that is sprayed onto a single cable or onto a wiring harness (9) with an insulating coating, formed, for example, of an external layer of plastic and an inner layer with insulating lacquer, leaving the conductors or wires (8) inside each cable exposed when the coating is scoured, said conductors being made of copper, for example. The spraying of the abrasive fluid (7) onto the cable or wiring harness (9) takes place inside a polishing chamber (2), manufactured in any steel alloy and which is positioned inside the polishing tank (1). The cable or wiring harness (9) is inserted into the polishing tank (1) through a cable intake (10) that consists of a modular steel element in order to enable cables or harnesses (9) of different diameters to be inserted.

In this second exemplary embodiment, the recycling or recovery of the abrasive fluid along with the remains of the coating material may be carried out in any of the ways previously mentioned. Likewise, the cable or wiring harness (9) intakes (10, 13) in the tank (1) and in the chamber (13) may be separated, as in the case shown, or coincide in a single cable or harness (9) intake.

In a third exemplary embodiment, the polishing chamber (2) for the insertion of the cable or wiring harness (9), insulated from the chamber of the tank (1), receives the abrasive fluid (7) from outside the polishing tank (1). More specifically, the mixture of pressurised air (11) is mixed with the abrasive material (4) outside the tank (1) due to the fact that the first (3) and second (5) pipes are joined outside the tank (1) as the abrasive material (4) is stored in an external container or storage space (12) rather than in the polishing tank (1) itself. This construction leaves a space in the tank (1) where in other constructions described the abrasive material is stored prior to being used, and which may be used to include a waste material separation system or device. It should be noted that in the case of scouring wiring harnesses, these being understood as several independent cables, each one with a conductor and coating thereof, and joined to each other through the coating thereof, the scouring operation is particularly difficult in the central area or core of the wiring harness because it is difficult for the abrasive fluid to access the area. For this reason, any of the preferred embodiments may comprise heating means for the cable in order to weaken said coating, said means preferably being provided before the cable or wiring harness (9) enters the device. Clearly, these heating means may also be used to scour single cables, for example when it is necessary to increase productivity.

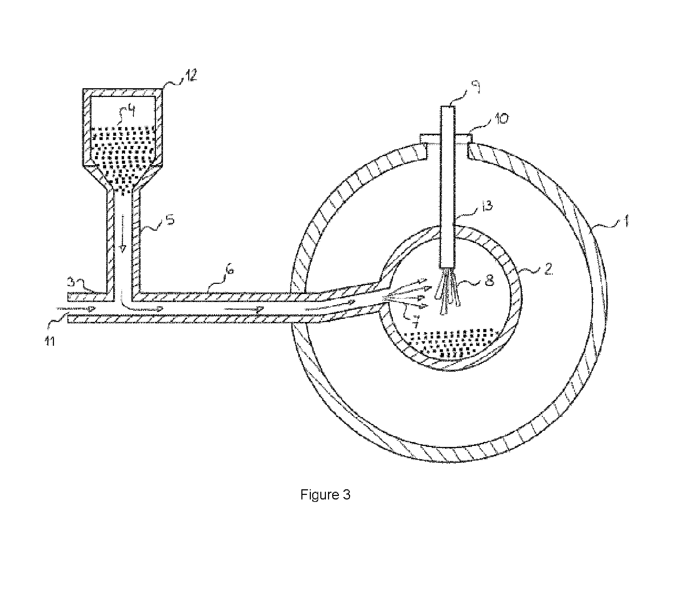

In an example that is not shown, and as a development of the device in figure 3 in which storage of the abrasive material (4) is carried out outside the polishing tank (1), it is possible for the polishing chamber (2) to coincide with the polishing tank (1), in such a way that the polishing tank (1) in turn constitutes the polishing chamber (2). In this case, there is only one cable or wiring harness (9) intake in the device.

## Claims

1. A cable or wiring harness (9) scouring device, formed of at least one conductor (8) and a coating, for removing said coating that surrounds said at least one conductor (8) and that comprises:
- at least one polishing tank (1) with at least one cable or wiring harness (9) intake (10),
- at least one first intake pipe (3) for a pressurised fluid (11) in the polishing tank (1),
- at least one second material pipe (5) for at least one abrasive material (4) joined to the first intake pipe (3), said joint between pipes being determined by at least one third pipe (6) for an abrasive fluid (7) comprised of the pressurised fluid (11) and the abrasive material (4),
**characterised in that**
the polishing tank (1) comprises a polishing chamber (2) inside thereof, separated from the polishing tank (1), with at least one cable or wiring harness (9) intake (13) and at least one intake of a third pipe (6) for the abrasive fluid (7), the coating removed from the cable and the abrasive fluid (7) mixing together in said chamber (2).

2. The device, according to claim 1, **characterised in that** the polishing chamber (2) comprises outlet means in order to extract the coating removed from the cable and the abrasive fluid (7) for the recovery of the abrasive material (4) and subsequent reuse thereof.

3. The device, according to claim 1, **characterised in that** the second pipe (5) is fed with at least one abrasive material (4) from inside the polishing tank (1) where said material (4) is stored.

4. The device, according to claim 1, **characterised in that** the second pipe (5) is fed with at least one abrasive material (4) from a container (12) outside the polishing tank (1) in which said material (4) is stored.

5. The device, according to claim 1, **characterised in that** it comprises more than one intake of a third pipe (6) situated at different heights.

6. The device, according to claim 1, **characterised in that** it comprises heating means for the pressurised fluid.

7. The device, according to claim 1, **characterised in that** it comprises heating means for the cable or wiring harness (9) at the intake thereof where it enters the device.

8. The device, according to claim 1, **characterised in that** the at least one intake of a third outlet pipe for abrasive fluid (6) may be orientated.

9. The device, according to claim 1, **characterised in that** the cable or wiring harness (9) intake (10) of the polishing tank (1) coincides with the cable or wiring harness (9) intake (13) of the polishing chamber (2).

10. The device, according to claim 1, **characterised in that** the polishing chamber (2) coincides with the polishing tank (1).
